# EUROPEAN PATENT APPLICATION

(11) **EP 1 152 075 A1**
(43) Date of publication of application: **07.11.2001**
(21) Application number: 01110704.2
(22) Date of filing: 02.05.2001
(51) Int. Cl.: D01H 9/18

(54) **A system for handling products along an overhead line in a spinning mill**

(30) Priority: 03.05.2000 IT BO000243
(71) Applicant: U.T.I.T. S.p.A., 41100 Modena (IT)
(72) Inventor: Ognibene, Franco, 41100 Modena (IT)
(74) Representative: Dall'Olio, Giancarlo

(57) **Abstract**

A system for handling products includes an overhead way (1) formed by a rail (2) having cross-like section, whose vertical branches (2a,2b) are open in their lower and upper part. Trains including series of sliding elements (3) sliding inside the rail (2). Each of said sliding elements (3) has two horizontal arms (3a,3b), extending into the horizontal branches (2c,2d) of the rail (2) and a vertical arm (3c) sliding in the upper vertical branch (2a) of the rail (2). Motor groups (4) are arranged along the overhead way (1), at distances smaller than the length of each train, and act on the upper part of the elements (3,3s), which are joined by pairs of plates (6a,6b), vertical and horizontal. Transfer plates (11) are joined to the upper part of the vertical plates (6a). A helical part (15), extending downwards or upwards, respectively, is connected to two portions (14,16), situated on different levels of the rail (2), so that the train coming from the portion (14) situated at a higher level is carried directly to the portion (16) situated on a different level, without waits.

## Description

The present invention relates to automated systems for textile fibers spinning. More particularly, the invention relates to a system for handling bobbins or reels of yarn along an overhead line in a spinning mill.

It is known that textile fibers are spun in different ways, in relation to the fiber type and the desired quality of the yarn.

The spinning is carried out by machines, called spinners or cone winders, in which the material is unwound from bobbins, spun and then rewound on other bobbins or reels.

The spinning techniques are not explained in the following because they are well known and because they are not related to the present invention.

In most cases, the bobbins and reels are transferred from material storage magazines to spinners or ring spinning frames, and then to the palletizing stations or other storage rooms in automatic way, by known, overhead systems or belt means.

For instance, groups of elements joined one to another, forming a kind of chain, extend along suitable overhead ways for transporting the bobbins.

Each group of elements, also called "train", carries bobbins suspension means.

The bobbins with material to be spun are formed in a working station by roving frames, then they are hung to support elements of a train which carries them to cone winders, where they are released and fed to the machines, manually or by automatic exchangers.

Likewise, the finished bobbins are hung up again to the transport system and carried to further working stations, by other trains.

According to a known solution, the overhead way includes one or more monorails, each of which is defined by a box-like body, whose section is cross-like and which is open at the top and at the bottom.

Sliding means, e.g. rollers mounted on bearings, joined to the elements forming the trains, rotate inside the horizontal branches and in the lower vertical branches.

Various elements are joined together by longitudinal plates, which are hinged to the heads of two consecutive elements.

The upper arm of the element is flat and is accessible through the upper aperture of the rail.

Pulling belts acting on the upper arm are operated by motor units arranged along the overhead way at distances smaller than the trains length.

Then, each train is moved by friction, according to the Italian Patent 1.213.982 of the Applicant.

Bobbins supporting means are hung to the plates between the adjacent elements.

In some cases, the spun material is moved to another section of the spinning machine, called spooler or to other machines for spooling.

There, the material is spun again and wound on other cylindrical supports, so as to form a reel.

The completed reels are put on a belt conveyor situated beside the spooler, and then carried toward the machine terminal head.

There, an elevator lifts the reels, by means of a transferring device, up to a level, on which the reels are put on the hanging supports, which are hung to a monorail transport system with a closed-loop or endless chain passing near the spoolers heads.

Afterwards, the endless chain carries the reels to a palletizing station.

Instead of the monorail transport system with hanging supports, belt conveyors are sometimes used.

It is necessary to provide lowering or lifting devices in the region of the lowest level crossings, as well as in the region of working stations situated at lower level, such as the palletizing station.

The lowering or lifting devices are equipped with transferring devices, which remove the reel from the hanging support and bring it to the desired level, and then, place it on a hanging support which moves to a lower level, toward the destination station.

In case of a simple lowering due to an unavoidable passage to a lower level, e.g. for a passage to a different rooms, it is necessary to repeat the procedure in the upwards direction.

This problem occurs also in case of overhead circuit for bobbins transport.

The use of each elevator creates considerable and expensive complications, both constructive and functional.

From the constructive point of view, the elevating and lowering devices are expensive and require check and control circuits, which complicate the electric diagram of the system, thus increasing considerably the construction and maintenance costs.

From the functional point of view, the elevating and lowering devices cause interruptions in the overhead way, which provokes long waits for transfer of the materials to the way section situated on a different level, occupation of a large section of the way for the return of the emptied trains after the transfer, complications of the management and the programming of the means for check and control of the whole system.

The elevating and lowering devices could be eliminated by gradual variation of the rail height, however the way would occupy a lot of space, thus rendering the more expensive devices preferable.

Likewise, the transfer devices for placing and removing the reels to and from the hanging supports feature the same problems and disadvantages, i.e. constructive and functional complications, as well as idle waits time.

It is also to be considered that it is very difficult to place or remove the reel to or from an oscillating support, e.g. hanging supports, therefore it is evident that a functionally valid and reliable solution is very difficult to obtain from the constructive point of view.

Moreover, each lifting and lowering device must be accompanied by transferring devices for removing and replacing the reels from and on the hanging supports, which makes the technical problem still more difficult.

The object of the present invention is to solve the above mentioned problems, i.e. to propose a system for handling reels, and possibly also bobbins, which does not use the above described additional devices, causing constructive and functional complications, such as elevating and lowering devices, transferring devices for placing and removal of the reels on and from the hanging supports.

Another object of the present invention is to propose a transport system, which avoids the contemporary presence, in the same point, of more devices of the above described devices, i.e. avoids the presence of transferring devices in the region of the reels lowering and elevating devices.

The above objects, together with others, are achieved by a system as described in the claims.

The characteristic features of the invention, will become evident from the following description, taken into consideration with the enclosed drawings, in which:
- Figure 1 is a view of a part of the overhead way, in which a difference of level is compensated by incorporation of one characteristic of the present invention;
- Figure 2 is a schematic, plan view of an equipment, to which the present invention, described and claimed, can be applied;
- Figure 3 is a cross-section view of a part of the rail, which forms the overhead way, and of an element sliding therein;
- Figure 4 is a lateral view of a short part of the subsequence of sliding elements forming the trains.

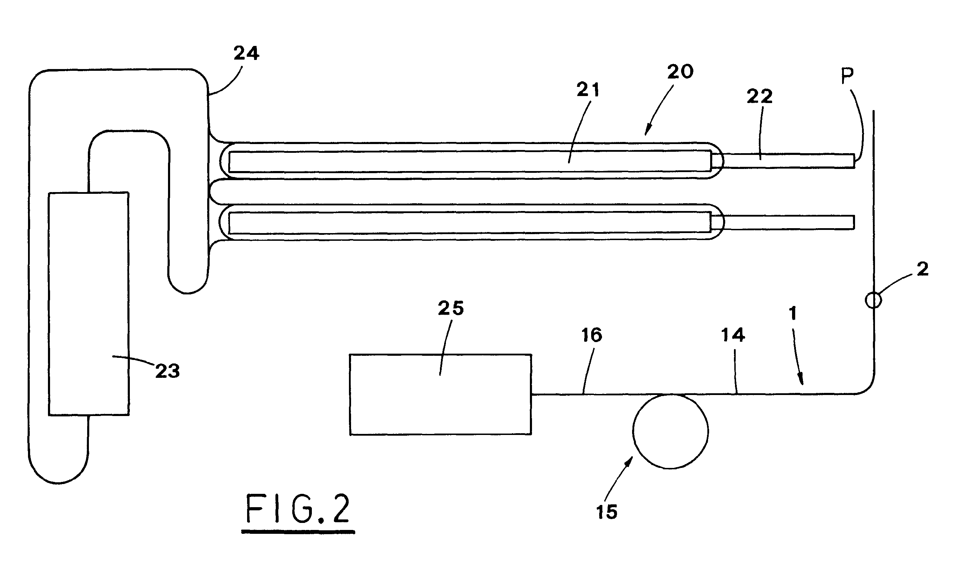

With reference to the above described figures, Figure 2 shows generally a system for handling products treated in a spinning mill of known type.

The mill includes a series of cone winders 20, connected, by an overhead circuit way 24, with so-called roving frames 23, where the bobbins are filled with the material to be spun.

Each of the cone winders 20 includes a spinning section 21 and a spooler section 22.

The material brought to the spinners on the bobbins is spun and then wound on other bobbins, which are withdrawn and sent to other, not shown, working stations.

In some cases, the spun material is moved to the spooler section 22 and then subjected to other spinning operations.

Finally, the material is wound on cylindrical supports, so as to define reels 5, which are sent, by a belt conveyor, toward the rear terminal part P of the spooler sections.

Then, the reels 5 are lifted by an elevator, so as to be moved toward a palletizing station 25 by another overhead circuit way 1.

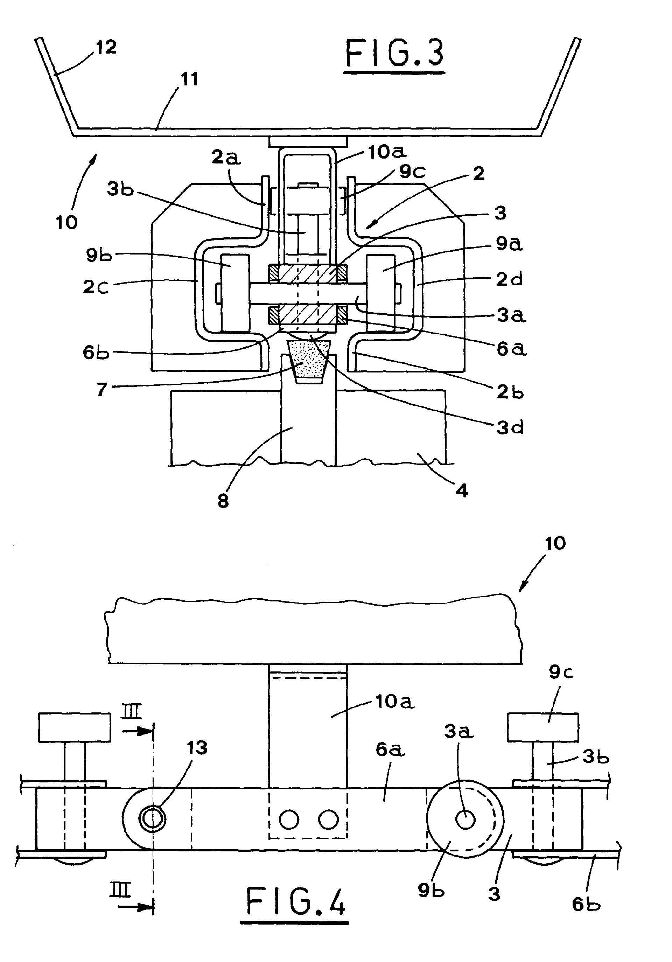

The overhead circuit way 1 includes a rail 2 having a cross-like section, shown in Figure 3.

The vertical branches 2a, 2b of the rail 2, upper and lower, respectively, are open.

Elements 3, sliding along the rail 2, constitute transport trains, according to known techniques (Figure 4).

The elements 3, of parallelepiped form, feature two through holes, perpendicular to each other. Two pins 3a, 3b, orthogonal to each other, pass through the perpendicular holes.

The horizontal pin 3a carries at its ends two rotating rollers 9a, 9b, mounted e.g. on bearings, not shown.

The rollers 9a, 9b roll along the horizontal branches 2c, 2d of the rail 2 (Figure 3).

The upper part of the vertical pin 3b carries a rotating roller 9c, rolling along the upper vertical branch 2a of the rail 2, while the lower part thereof carries a widened head 3d.

Each train includes a series of elements 3 joined one to another by pairs of plates 6a, 6b, arranged lying in planes perpendicular to each other, thus forming an articulated chain.

The plates 6a, 6b feature through holes 13 in the regions of the opposite ends thereof.

The vertical plates 6a are situated respectively between the element 3 and the relative lateral rollers 9a, 9b, so that the horizontal pins 3a of two adjacent elements 3 can move freely inside the holes 13 of the vertical plates 6a.

The horizontal plates 6b of each pair are situated respectively between the element 3 and the upper roller 9c, and between the element 3 and the widened head 3d.

Likewise, the vertical pin 3b moves freely inside the holes 13 of the horizontal plates 6a.

Thus, each element 3 constitutes a double hinged joint, forming the articulated chain.

A belt 7, situated inside motor groups 4, engages with the widened head 3d of each element 3.

The motor groups 4 are arranged along the overhead circuit 1 at distances shorter than the length of each train.

The belt 7 is wound on the pulleys 8, situated inside the motor groups 4 and driven into rotation by suitable motors.

The invention can be used also in systems, in which the transport trains are driven in a way different from the one described above.

Means 10 for supporting products, o more precisely, reels 5, are fastened to the vertical plates 6a, which join the elements 3, e.g. by support arms 10a.

The supporting means 10 include a plurality of supporting plates 11, equipped with holding edges 12, extending parallel to the direction of the plate 11 movement along the overhead circuit way 1 (Figure 3).

In this way, the reels 5 can be loaded in a very simple way, by pushing the reel so that they roll in between the holding edges 12 of the plate 11, in a direction parallel to the spooler section 22 extension, in the region of the terminal part P thereof.

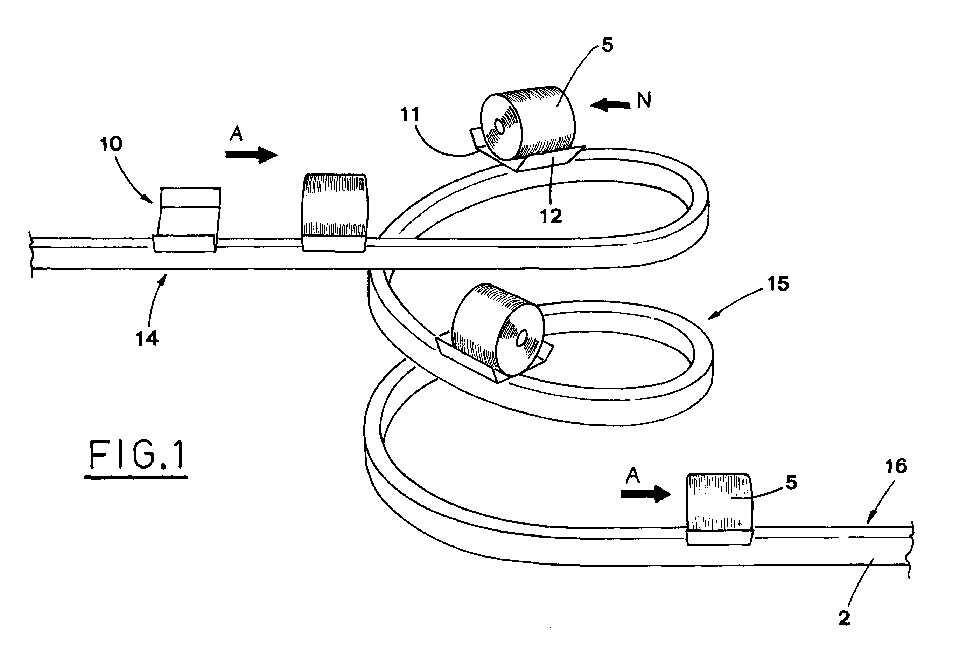

Likewise, it is very simple to unload the reel from the plate by pushing it in a direction transversal to the movement direction A, seen in Figure 1, in the region of the palletizing station 25.

Therefore, it is possible to eliminate the transferring devices for loading and unloading the reels to and from the hanging supports in the start and arrival stations.

Likewise, it is possible to avoid all problems deriving from the necessity to stabilize the hanging supports during the above operations.

Analogous transport trains can be used also for transporting bobbins full of material to be spun from the so-called roving frames 23 to the cone winders 20, and empty bobbins from the cone winders 20 to the roving frames 23, so as to be loaded again.

However, in this case, the plates 11 are substituted by suspended supporting means, not shown as of known type, suspended to the lower part of the vertical plates 6a joining the elements 3, while the motor groups 4 act on the articulated chain from the top.

In both cases, when it is necessary to compensate a difference of level caused by an obligatory passage to the lower level or to a different working level of the working stations, the system uses a part of circuit 15, having a helical shape and situated in the region of the point of level difference.

Obviously, the helical part 15 can extend downwards or upwards, respectively, and it is connected directly to two portions 14, 16, situated upstream and downstream thereof, respectively, on different levels.

In this way, the circuit mono-rail is maintained continuous and is not interrupted even in case of different levels of transport.

Practically, the train coming from the upper portion 14, rolling in e.g. counterclockwise direction N shown in Figure 1, is carried directly to the lower portion 16.

The helical part 15 includes a series of fragments of the rail 2, curved by an angle of a predetermined amplitude and joined one to another.

As it has been already mentioned, it is possible to apply the helical part 15 to the overhead circuit 24 aimed at the bobbins transport, in the points where it is necessary to change the transport level.

Figure 1 does not show the structure supporting the helical part 15, whose extension is obviously appropriate to assure the rail stability.

The use of the helical part 15 allows to avoid waits for transfer of the reels 5 from the transport train to the lowering and elevating device, and vice-versa, from the lowering and elevating device again to the train on a different level.

The overhead circuit remains always free and available for a next train, since the previous train can proceed without stops.

However, one of the most important advantages derives from the fact that the lowering and elevating devices, as well as transferring devices can be eliminated.

Another, not less important, advantage lies in the simplification of the check and control system of the overhead circuit, since it must manage only one start and one arrival for each part, without intermediate stops for changing the transport level.

All these advantages result in considerable reduction of the system total production costs, as well as a great reduction of the number of maintenance operations, and consequently of maintenance costs.

## Claims

1. System for handling products, including an overhead way (1) formed by a rail (2) with a cross-like section, whose vertical branches (2a,2b) are open in their lower and upper part, with transport trains including sliding elements (3) sliding inside said rail (2), each of said sliding elements (3) featuring two through holes, perpendicular to each other, with pins (3a,3b) passing through said holes, with the ends of a horizontal pin (3a) sliding in horizontal branches (2c,2d) of said rail (2) and with the upper end of a vertical pin (3b) sliding in an upper vertical branch (2a) of said rail (2), and with motor groups (4) arranged along the overhead way (1), at distances smaller than the length of each train, and with means (10) for supporting products (5) joined to said elements (3), said system **characterized in that** it includes at least one helical part (15), extending downwards or upwards, respectively, and connected directly to two portions (14,16), situated upstream and downstream thereof, respectively, on different levels, so that the train coming from the portion (14) situated at a higher level is carried directly to the portion (16) situated on a different level.

2. System for handling products, including an overhead way (1) formed by a rail (2) with a cross-like section, whose vertical branches (2a,2b) are open in their lower and upper part, with transport trains including sliding elements (3) sliding inside said rail (2), each of said sliding elements (3) featuring two through holes, perpendicular to each other, with pins (3a,3b) passing through said holes, with the ends of a horizontal pin (3a) sliding in horizontal branches (2c,2d) of said rail (2) and with the upper end of a vertical pin (3b) sliding in an upper vertical branch (2a) of said rail (2), and with motor groups (4) arranged along the overhead way (1), at distances smaller than the length of each train, and with means (10) for supporting products (5) joined to said elements (3), said system **characterized in that** it includes a series of plates (11) supporting said products (5) and fastened to the upper part of said elements (3) of said trains.

3. System for handling products, including an overhead way (1) formed by a rail (2) with a cross-like section, whose vertical branches (2a,2b) are open in their lower and upper part, with transport trains including sliding elements (3) sliding inside said rail (2), each of said sliding elements (3) featuring two through holes, perpendicular to each other, with pins (3a,3b) passing through said holes, with the ends of a horizontal pin (3a) sliding in horizontal branches (2c,2d) of said rail (2) and with the upper end of a vertical pin (3b) sliding in an upper vertical branch (2a) of said rail (2), and with motor groups (4) arranged along the overhead way (1), at distances smaller than the length of each train, and with means (10) for supporting products (5) joined to said elements (3), said system **characterized in that** said supporting means (10) include a series of plates (11) for supporting said products (5) and fastened to the upper part of said elements (3) of said trains, with said motor groups (4) acting on the lower part of said elements (3) of said trains, and **in that** it includes at least one part of helical way (15), extending downwards or upwards, respectively, and connected directly to two portions (14,16), situated upstream and downstream thereof, respectively, on different levels, so that the train coming from the portion (14) situated at a higher level is carried directly to the portion (16) situated on a different level.

4. System for handling products, according to claim 1, **characterized in that** said train includes a series of elements (3), which includes double hinged pairs of plates (6a,6b), said plates (6a,6b) featuring through holes (13) and arranged orthogonal to each other, so as to form a chain, with the vertical plates (6a) and horizontal plates (6b) situated alternately between the adjacent elements (3,3s), so that the horizontal pins (3a) and vertical pins (3b) pass freely through the holes (13) of said vertical plates (6a) and horizontal plates (6b).

5. System for handling products, according to claim 3, **characterized in that** said train includes a series of elements (3) including double hinged pairs of plates (6a,6b), said plates (6a,6b) featuring through holes (13) and arranged orthogonal to each other, so as to form a chain, with the vertical plates (6a) and horizontal plates (6b) situated alternately between the adjacent elements (3,3s), so that the horizontal pins (3a) and vertical pins (3b) pass freely through the holes (13) of said vertical plates (6a) and horizontal plates (6b).

6. System for handling products, according to claim 2, **characterized in that** said train includes a series of elements (3) including double hinged pairs of plates (6a,6b), said plates (6a,6b) featuring through holes (13) and arranged orthogonal to each other, so as to form a chain, with the vertical plates (6a) and horizontal plates (6b) situated alternately between the adjacent elements (3,3s), with said supporting plates (11) fastened to the vertical plates (6a) and with said vertical pin (3b) featuring, in its lower part, a widened head (3d), being acted on by friction of a belt (7), driven by each of said motor groups (4).

7. System for handling products, according to claim 3, **characterized in that** said train includes a series of elements (3) including double hinged pairs of plates (6a,6b), said plates (6a,6b) featuring through holes (13) and arranged orthogonal to each other, so as to form a chain, with the vertical plates (6a) and horizontal plates (6b) situated alternately between the adjacent elements (3,3s), with said supporting plates (11) fastened to the vertical plates (6a) and with said vertical pin (3b) featuring, in its lower part, a widened head (3d), being acted on by friction of a belt (7), driven by each of said motor groups (4).

8. System, according to claim 3, **characterized in that** each supporting plate (11) features holding edges (12) which extend parallel to the direction of said plate (11) movement along the overhead way (1).

9. System, according to claim 3, **characterized in that** said helical part (15) includes a series of fragments of the rail (2), curved by an angle of a predetermined amplitude and joined one to another.

10. System for handling products, including an overhead way (1) formed by a rail (2) of a cross-like section, with sliding elements (3) forming transport trains sliding inside said rail (2), and with means (10), for supporting said products, joined to said trains, said system **characterized in that** said way includes at least one helical section (15), extending downwards or upwards, respectively, and connected directly to two portions (14,16), situated on different levels, so that the train coming from the portion (14) situated at a higher level is carried directly to the portion (16) situated on a different level.
